# EUROPÄISCHE PATENTSCHRIFT

(11) **EP 3 292 540 B1**
(45) Veröffentlichungstag und Bekanntmachung des Hinweises auf die Patenterteilung: **26.06.2019**
(21) Anmeldenummer: 16726837.4
(22) Anmeldetag: 25.05.2016
(51) Int. Cl.: G06T 11/20, H02J 13/00, H02J 3/00

(54) **VERFAHREN ZUM BETREIBEN EINES NETZWERKS MIT MEHREREN KNOTENEINRICHTUNGEN UND NETZWERK**
METHOD FOR OPERATING A NETWORK WITH A PLURALITY OF NODE DEVICES AND CORRESPONDING NETWORK
PROCÉDÉ POUR FAIRE FONCTIONNER UN RÉSEAU DE DISPOSITIFS NODAUX ET RÉSEAU CORRESPONDANT

(30) Priorität: 29.06.2015 DE 102015212026
(43) Veröffentlichungstag der Anmeldung: 14.03.2018
(73) Patentinhaber: Siemens Aktiengesellschaft, 80333 München (DE)
(72) Erfinder: KROMPASS, Denis, 81549 München (DE); MÜNZ, Ulrich, 08536 Plainsboro (US); RUSITSCHKA, Sebnem, 81735 München (DE); TRESP, Volker, 81369 München (DE)
(86) Internationale Anmeldenummer: PCT/EP2016/061757
(87) Internationale Veröffentlichungsnummer: WO 2017/001122

(56) Entgegenhaltungen:
- US-A1- 2014 244 065
- PAULA S CASTRO VIDE ET AL: "Use of available phasor measurements for system observability: A case study", POWER ENGINEERING, ENERGY AND ELECTRICAL DRIVES, 2009. POWERENG '09. INTERNATIONAL CONFERENCE ON, IEEE, PISCATAWAY, NJ, USA, 18. März 2009 (2009-03-18), Seiten 95-100, XP031453967, ISBN: 978-1-4244-4611-7
- Selim Haysam ET AL: "Statistical Modeling and Scalable, Interactive Visualization of Large Scale Big Data Networks", 2014 ASE BIGDATA/SOCIALCOM/CYBERSECURITY Conference, Stanford University, May 27-31, 2014, 31. Mai 2014 (2014-05-31), Seiten 1-6, XP055291806, Gefunden im Internet: URL:http://www.ase360.org/bitstream/handle /123456789/139/submission5.pdf?sequence=1& isAllowed=y [gefunden am 2016-07-28]

## Beschreibung

Die vorliegende Erfindung betrifft ein Verfahren zum Betreiben eines Netzwerks mit mehreren Knoteneinrichtungen und ein Netzwerk, welches zum Ausführen dieses Verfahrens geeignet ist.

Für die Automatisierung und (industriellen) Verfahrensabläufen werden komplexe und detaillierte Automatisierungsdaten von Messpunkten, welche Knoten eines Netzwerks entsprechen können, einer intelligenten und digitalisierten Infrastruktur erfasst. Zu derartigen Infrastrukturen aus vernetzten Messpunkten zählen Hochspannungsnetze, Verkehrsnetze, Versorgungsketten, Logistik und Herstellungsanlagen. Die Automatisierungsdaten sind insbesondere kontinuierlich, in Echtzeit und räumlich-zeitlich erfasste, miteinander verknüpfte, graphische Daten über die dynamischen Ströme oder Flüsse in diesen dynamischen Netzwerken. Die Automatisierungsdaten eines Messpunktes können dabei mehrere Messgrößen umfassen. Man erhält insbesondere mehrdimensionale Automatisierungsdaten, wenn mehrere Messgrößen pro Messpunkt erfasst werden.

Die US 2014/0244065 A1 zeigt am Beispiel eines elektrischen Versorgungsnetzwerks, wie mit Informationen über den Aufbau des Netzwerks und Messwerten, wie zum Beispiel die Spannung an einem Knotenpunkt oder die Last einer Verbindungsleitung, der Zustand des Netzwerks überwacht werden kann.

Konventionell werden die Automatisierungsdaten beispielsweise in relationalen Datenbanken abgelegt. Dabei ist es wünschenswert, schnell auf die gespeicherten Automatisierungsdaten zugreifen zu können und gleichzeitig eine vorhandene Speicherkapazität optimal auszunutzen. Zur Analyse und Auswertung werden manchmal unterschiedliche Datenbanksysteme parallel benutzt, wodurch die Automatisierungsdatenmenge insgesamt erhöht ist. Auch eine automatisierte Auswertung der Automatisierungsdaten wird erschwert, wenn unterschiedliche Datenbanksysteme eingesetzt werden.

Bislang wird eine automatisierte Auswertung der Automatisierungsdaten mit Hilfe eines effektiven Dataminings und lernfähiger Systeme realisiert. Es ist wünschenswert, dass das Automatisierungssystem auf der Basis von selbst akquirierten Automatisierungsdaten sowie einer automatisierten Auswertung derselben zu betreiben. Für die Auswertung der Automatisierungsdaten, insbesondere für das Datamining, werden spezielle Datenformate eingesetzt.

Um die Komplexität der Automatisierungsdaten zu reduzieren, kann eine lineare Reduktion erfolgen. Allerdings ist diese Technik für die Handhabung von komplexen, nichtlinearen Automatisierungsdaten eher ungeeignet. Nichtlineare Datenmodelle gelten ferner als noch nicht ausgereift.

Vor diesem Hintergrund hat die mehrdimensionale Datenmodellierung, insbesondere das so genannte "Online Analytical Processing" (OLAP), über die letzten Jahrzehnte an Bedeutung gewonnen. Der Kern jedes OLAP-Systems bildet ein so genannter "OLAP-Cube", der numerische Einträge (measures) enthält, die nach Messgrößen klassifiziert sind. Die Einträge sind jeweils den Schnittstellen eines "Hypercubes", der durch die Messgrößen als Dimensionen als ein Vektorraum aufgespannt wird, zugewiesen. Auch in OLAP-Systemen muss ein Kompromiss zwischen der Effizienz in der Datensicherung und der Effizienz bei Datenabfragen getroffen werden.

Die bislang bemühten Maßnahmen zur Auswertung und Erfassung von Automatisierungsdaten eines Automatisierungsnetzwerks für dessen Betrieb werden teilweise als ungenügend erachtet.

Vor diesem Hintergrund besteht eine Aufgabe der vorliegenden Erfindung darin, das Betreiben eines Netzwerks, insbesondere eines Automatisierungsnetzwerks, zu verbessern.

Demgemäß wird ein Verfahren zum Betreiben eines Netzwerks mit mehreren Knoteneinrichtungen vorgeschlagen. Das Verfahren umfasst die Schritte:
Koppeln jeder Knoteneinrichtung mit mindestens einer anderen Knoteneinrichtung mit Hilfe einer jeweiligen Kanteneinrichtung;
Festlegen einer Globalzeit für alle Knoteneinrichtungen und Kanteneinrichtungen;
Erfassen der Knoteneinrichtungen;
Erfassen der Kanteneinrichtungen;
Zuweisen eines Adresselements zu jedem Knotenpaar aus zwei Knoteneinrichtungen, die mit Hilfe einer Kanteneinrichtung miteinander koppelbar sind;
Speichern der Adresselemente;
Zuweisen eines Inhaltselements zu jedem Adresselement, wobei das Inhaltselement das Vorhandensein oder Nichtvorhandensein einer Kanteneinrichtung zwischen dem Knotenpaar, welchem das Adresselement zugewiesen ist, angibt;
Speichern des Inhaltselements in Abhängigkeit von dem jeweiligen Adresselement, dem das Inhaltselement zugewiesen wurde;
Erfassen von mindestens einem Betriebsparameter für mindestens ein ausgewähltes Knotenpaar oder eine ausgewählte Knoteneinrichtung; und
Speichern des mindestens einen Betriebsparameters als ein weiteres Inhaltselement in Abhängigkeit von dem jeweiligen Adresselement, das dem ausgewählten Knotenpaar oder der ausgewählten Knoteneinrichtung zugewiesen wurde.

Beim Erfassen der Kanteneinrichtungen und beim Erfassen des mindestens einen Betriebsparameters wird ein jeweiliger Globalzeit-Zeitpunkt mit erfasst. Der jeweilige Globalzeit-Zeitpunkt wird beim Speichern des Inhaltselements und/oder des weiteren Inhaltselements mitgespeichert, wobei
das Speichern des Adresselements, des Inhaltselements und des mindestens einen weiteren Inhaltselements in einer Datenbankeinrichtung mit einer tensoriellen Datenstruktur erfolgt.

Das vorgeschlagene Verfahren ist insbesondere geeignet, ein Netzwerk, das einen Bereich von bis zu 10⁸ km² abdeckt, zu betreiben. Sogar das Betreiben eines Netzwerks von astronomischen Geräten, z.B. Satelliten, ist gemäß dem Verfahren möglich.

Das Netzwerk ist beispielsweise ein Stromnetz, ein Verkehrsnetzwerk, eine Versorgungsnetzwerk (z.B. Wasser, Gas, Öl, Lebensmittel, Güter, Waren, usw.), eine Logistikkette und/oder eine Herstellungsanlage. Das Netzwerk umfasst eine Mehrzahl von Knoteneinrichtungen und ist insbesondere geeignet, Energie, Strom, Güter, Waren, Personen, Verkehr, Ressourcen, Daten und/oder Material zwischen den, von den und/oder an die Knoteneinrichtungen zu transportieren oder zu übertragen.

Die Knoteneinrichtungen können Elemente, Einrichtungen, Stationen, Einheiten oder sonstige Glieder des jeweiligen Netzwerks sein. Man kann auch von einem Messpunkt als Knoteneinrichtung sprechen. Beispielsweise umfassen die Knoteneinrichtungen Kraftwerke, Umspannwerke, Transformatoren, Strommasten, Verteiler oder andere Glieder eines Stromnetzes. Insbesondere umfassen die Knoteneinrichtungen eines Stromnetzes eine Phasor-Measurement-Unit (PMU). In einem weiteren Beispiel können die Knoteneinrichtungen Verkehrsampeln, Schranken, Brücken, Bahnhöfe, Flughäfen, Häfen, Kontrollstellen oder sonstige Kontrolleinheiten in einem Verkehrsnetz sein. Insbesondere können die Knoteneinrichtungen eines Verkehrsnetzes Floating Car Date erfassen. In einem weiteren Beispiel sind die Knoteneinrichtungen einzelne Produktionsmodule einer Produktionsanlage, die eine oder mehrere Aktionen (z.B. Schweißen, Löten, Transportieren, Bohren, Schneiden, usw.) zur Herstellung eines Produkts ausführen können.

Ferner können Knoteneinrichtungen real und physisch im jeweiligen Netzwerk existieren oder virtuell, z.B. vom Betreiber des Netzwerks, eingefügt sein. Virtuelle Knoteneinrichtungen können vorteilhaft sein, um z.B. komplex vernetzte reale Knoteneinrichtungen einfacher darzustellen und dadurch besser steuern zu können. Beispielsweise kann man eine reale Kanteneinrichtung durch ein Einfügen einer virtuellen Knoteneinrichtung in zwei "virtuelle" Kanteneinrichtungen teilen, die separat überwacht und kontrolliert werden können. Virtuelle Knoteneinrichtungen können insbesondere vorübergehend in das Netzwerk eingefügt sein.

Ferner können Knoteneinrichtungen stationär, d.h. örtlich fixiert, oder beweglich sein. Knoteneinrichtungen können insbesondere vorübergehend, d.h. für eine vorgegebene Zeitdauer, existieren oder vorübergehend abschaltbar sein.

Insbesondere umfasst das Netzwerk intelligente, digitalisierte und/oder automatisierte Knoteneinrichtungen und/oder Kanteneinrichtungen. Beispielsweise umfassen die Knoteneinrichtungen und/oder Kanteneinrichtungen Cyber-Physical-Systeme, intelligente elektronische Geräte (Intelligent Electronic Devices, IED) sowohl auf einer Feldebene als auch auf einer der Produktions- oder Geschäftsführungsebenen. Insbesondere werden die Knoteneinrichtungen mit Hilfe von Echtzeit-Betriebssystemen betrieben.

Das Koppeln der Knoteneinrichtungen miteinander bezieht sich insbesondere auf ein Herstellen einer Verbindung zwischen den jeweiligen Knoteneinrichtungen, wodurch ein Transport oder eine Übertragung zwischen diesen Knoteneinrichtungen ermöglicht wird. Beispielsweise kann nach einem erfolgreichen Koppeln von zwei Knoteneinrichtungen eines Stromnetzes ein Stromfluss zwischen diesen Knoteneinrichtungen möglich sein. Ferner wird beispielsweise ein Güter-, Waren-, Personen-, Verkehrs-, Daten-, Informations- und/oder Materialfluss zwischen zwei Knoteneinrichtungen des jeweiligen Netzwerks ermöglicht, wenn diese Knoteneinrichtungen miteinander gekoppelt sind.

Insbesondere können die Knoteneinrichtungen Informationen miteinander austauschen, unabhängig davon, ob sie direkt miteinander gekoppelt sind. Dazu kann das Netzwerk mindestens eine Kontrolleinheit aufweisen, mit der alle Knoteneinrichtungen und/oder alle Kanteneinrichtungen gekoppelt sind, so dass ein Betreiber des Netzwerks die Knoteneinrichtungen und/oder Kanteneinrichtungen von der Kontrolleinheit aus überwachen und/oder kontrollieren kann.

Die Kanteneinrichtungen können dabei jeweils als ein jeweiliges Verbindungsglied zwischen zwei miteinander gekoppelten Knoteneinrichtungen fungieren. Insbesondere wird eine Kanteneinrichtung zwischen zwei Knoteneinrichtungen installiert, implementiert oder auf eine sonstige Weise bereitgestellt, um diese zwei Knoteneinrichtungen miteinander zu koppeln.

Des Weiteren können sowohl reale als auch virtuelle Abschnitte (Strecken) als die jeweilige Kanteneinrichtung zwei Knoteneinrichtungen miteinander koppeln oder verbinden. Beispiele für Kanteneinrichtungen sind Stromleitungen (Hoch-, Mittel- oder Niederspannung) eines Stromnetzes und Straßen- oder Schienenabschnitte eines Verkehrsnetzes. Betrifft das Verfahren beispielsweise ein Luftverkehrsnetz mit Flughäfen als Knoteneinrichtungen, so sind alle Luftstrecken Kanteneinrichtungen. In einem Logistiknetzwerk können die Kanteneinrichtungen reale Verkehrsverbindungsabschnitte oder virtuelle, beliebige Verbindungsmöglichkeiten zwischen miteinander gekoppelten Stationen (Knoteneinrichtungen) umfassen.

Es können mehrere Verbindungsmöglichkeiten zwischen zwei Knoteneinrichtungen existieren. Insbesondere können die Verbindungsmöglichkeiten unterschiedlichen Richtungen (des Material-, Waren-, Güter-, Strom-, Informations-, Verkehrs- und/oder Ressourcenflusses) zwischen zwei Knoteneinrichtungen entsprechen. In diesem Fall können mehrere Kanteneinrichtungen definiert sein, wobei jede dieser Kanteneinrichtungen jeweils einer dieser Verbindungsmöglichkeiten entspricht, oder alle Verbindungsmöglichkeiten als eine einzige Kanteneinrichtung zusammengefasst sein, oder virtuelle Knoteneinrichtungen in jede der Verbindungsmöglichkeiten eingefügt werden, um die Verbindungsmöglichkeiten einzeln steuern zu können.

Die Globalzeit kann sich auf ein einheitliches Zeitmaß in dem jeweiligen Netzwerk beziehen, d.h. alle Ereignisse, Änderungen und/oder Neuerungen werden in Abhängigkeit der Globalzeit erfasst, die für alle Knoteneinrichtungen und Kanteneinrichtungen des Netzwerks einheitlich ist. Vorzugsweise ist die Globalzeit für das Netzwerk mit einer präzisen und absoluten Referenzzeit, z.B. einer Atomuhr oder Satellitenuhrzeit, geknüpft.

Durch das Festlegen der Globalzeit können die Knoteneinrichtungen und/oder die Kanteneinrichtungen synchronisiert werden. Ereignisse können entsprechend in einem einheitlichen Zeitmaß erfasst und chronologisch geordnet werden. Dadurch kann eine Suche nach dem Ursprung eines Ereignisses erleichtert werden. Abhängig von einer Datenerfassungsrate (z.B. mehrere Samples pro Sekunde) kann eine Synchronisierung der Knoten- und Kanteneinrichtungen mit Hilfe der Globalzeit zu einer verbesserten zeitlichen Auflösung der erfassten Ereignisse im Netzwerk führen.

Beispielsweise werden alle Knoteneinrichtungen und alle Kanteneinrichtungen erfasst und in einer Datenbankeinrichtung in dem Netzwerk registriert. Eine Datenbankeinrichtung ist insbesondere eine Einrichtung zum elektronischen und/oder Verwalten von Daten. Die Datenbankeinrichtung kann zentral, lokal und/oder verteilt ausgebildet sein. Vorzugsweise ist jede Knoteneinrichtung mit jeder anderen Knoteneinrichtung des Netzwerks koppelbar. Vorzugsweise werden alle möglichen Kombinationen von zwei Knoteneinrichtungen des Netzwerks (oder eines Teils des Netzwerks) als Knotenpaare definiert. Alternativ können nur diejenigen Paare von zwei Knoteneinrichtungen, die miteinander gekoppelt sind, als Knotenpaare erfasst werden.

Beispielsweise wird jede der Knoteneinrichtungen mit einem jeweiligen Index versehen. Entsprechend kann das Adresselement die zwei Indizes der Knoteneinrichtungen des jeweiligen Knotenpaares enthalten. Dadurch kann eine eindeutige Zuweisung jedes Knotenpaares zu einem Adresselement gegeben sein. Alle Adresselemente werden zentral in einer Datenbankeinrichtung des Netzwerks und/oder lokal bei den einzelnen Knoteneinrichtungen gespeichert. Sind die zwei Knoteneinrichtungen eines Knotenpaares mit Hilfe einer Kanteneinrichtung miteinander gekoppelt, entspricht das Adresselement, das dem Knotenpaar zugewiesen ist, der Kanteneinrichtung. Entsprechend kann das Adresselement lokal bei der Kanteneinrichtung gespeichert sein, falls die Kanteneinrichtung entsprechende Rechen- und/oder Speicherkapazität aufweist. Das Adresselement ist insbesondere eine Zuordnung zu einem Speicherort. In einer Ausführungsform ist das Adresselement ein Tupel aus zwei Zahlen oder Indizes. Die Indizes können Integer sein.

Da die Adresselemente jeweils ein Knotenpaar mit einer ersten und zweiten Knoteneinrichtung indiziert, kann eine Gesamtheit aller Adresselemente eine quadratische, zweidimensionale Matrix aufspannen, wobei eine erste Dimension (z.B. Reihen) der Matrix den ersten Knoteneinrichtungen und eine zweite Dimension (z.B. Spalten) der Matrix den zweiten Knoteneinrichtungen entsprechen.

Jedem Adresselement wird mindestens ein Inhaltselement zugewiesen. Im Folgenden bezeichnet ein zugehöriges Adresselement bezüglich eines Inhaltselements dasjenige Adresselement, dem das Inhaltselement zugewiesen ist. Das Inhaltselement kann Teil einer Datenstruktur sein, wie z.B. eine Variable, ein Feld, eine Tabelle oder ein Array. Vorzugsweise beinhaltet ein Inhaltselement einen Zeitstempel.

Das erste Inhaltselement gibt an, ob das Knotenpaar, dem das Adresselement zugewiesen ist, mit Hilfe einer Kanteneinrichtung miteinander gekoppelt ist oder nicht. Beispielsweise gibt es einen Eintrag für das erste Inhaltselement nur dann, falls das Knotenpaar, dem das Adresselement zugewiesen ist, mit Hilfe einer Kanteneinrichtung miteinander gekoppelt ist.

Ferner werden ein oder mehrere Betriebsparameter für ein oder mehrere ausgewählte Knotenpaare erfasst. Vorzugsweise werden Knotenpaare ausgewählt, die mit Hilfe einer Kanteneinrichtung miteinander gekoppelt sind. Entsprechend werden der eine oder mehrere Betriebsparameter für die jeweilige Kanteneinrichtung erfasst.

Ferner können Betriebsparameter an zwei Knoteneinrichtungen erfasst, miteinander kombiniert und einer Kopplung zwischen den zwei Knoteneinrichtungen zugewiesen werden, unabhängig davon, ob eine Kanteneinrichtung zwischen den zwei Knoteneinrichtungen besteht oder nicht. Dabei kann sich die Kopplung einer Funktion der Kanteneinrichtung beziehen. Kombinieren kann insbesondere ein Berechnen eines Inhaltselements mit Hilfe von mathematischen Operationen betreffen.

Des Weiteren können mehrere Knoteneinrichtungen, die zumindest teilweise miteinander gekoppelt sind, ein Unternetzwerk des Netzwerks ausbilden. Die an den mehreren Knoteneinrichtungen erfassten Betriebsparameter werden miteinander kombiniert und dem Unternetzwerk zugewiesen. Das Unternetzwerk kann als eine Knoteneinrichtung betrachtet werden kann. Dementsprechend können Betriebsparameter und Inhaltselemente Kopplungen zwischen dem Unternetzwerk und weiteren Knoteneinrichtungen zugewiesen werden.

Wahlweise können der eine oder die mehreren Betriebsparameter für eine oder mehrere ausgewählte Knoteneinrichtungen erfasst werden. Beispielsweise können die an einer ersten Knoteneinrichtung erfassten Betriebsparameter mit den Betriebsparametern, die an einer zweiten, mit der ersten Knoteneinrichtung gekoppelten Knoteneinrichtung erfasst sind, verglichen werden, um einen Betriebsparameter für ein Knotenpaar aus der ersten und der zweiten Knoteneinrichtung zu berechnen. Dabei kann mindestens eine mathematische Operation, z.B. Addition, Subtraktion, Multiplikation, Division, Faktorisierung oder eine Kombination hiervon, ausgeführt werden.

Mehrere Betriebsparameter können in einem Feld (z.B. in einem Vector-Array, in einer Tabelle, in einer Liste oder in einer Matrix) angeordnet und dem jeweiligen Adresselement zugewiesen werden. Die Reihenfolge der gespeicherten Betriebsparameter ist vorzugsweise einheitlich für alle Adresselemente des Netzwerks. Vorzugsweise gibt das erste Inhaltselement an, ob das jeweilige Knotenpaar mit Hilfe einer Kanteneinrichtung miteinander gekoppelt ist.

Der mindestens eine erfasste Betriebsparameter wird als mindestens ein Inhaltselement dem jeweiligen Adresselement und somit einem Knotenpaar anstatt den Knoteneinrichtungen, welche das Knotenpaar bilden, zugewiesen. Dadurch wird eine Dimension oder ein Freiheitsgrad bei der Speicherung und Zuweisung des Inhaltselements reduziert.

Der mindestens eine Betriebsparameter umfasst beispielsweise eine Frequenz, eine Spannung, einen Phasenwinkel, eine Amplitude, eine Modulation, eine Leistungsaufnahme, einen Widerstand, eine Betriebstemperatur, eine Last, eine Laufzeit, eine Belastung, eine Füllmenge, eine Flussmenge, eine Verfügbarkeit, einen Durchsatz, usw. Die Betriebsparameter sind insbesondere geeignet, einen Betriebszustand der jeweiligen Kanteneinrichtung, der jeweiligen Knoteneinrichtung und/oder des Knotenpaares zu charakterisieren oder zu beschreiben.

Der mindestens eine Betriebsparameter kann Daten eines Automatisierungssystems umfassen. Ferner kann der mindestens eine Betriebsparameter kontinuierliche, dynamische Daten umfassen. Der mindestens eine Betriebsparameter kann miteinander verknüpft sein. Der mindestens eine Betriebsparameter und/oder die Inhaltselemente sind insbesondere relationale Daten, d.h. in Abhängigkeit von inneren und/oder äußeren Faktoren, z.B. einer Topologie des Netzwerks, erfasst oder erstellt. Dabei kann sich die Topologie Kopplungen der Knoteneinrichtungen und der Kanteneinrichtungen des Netzwerks miteinander betreffen.

Das Erfassen des mindestens einen Betriebsparameters bezieht sich insbesondere auf ein Messen, ein Abrufen von gespeicherten Daten, eine lokale Abfrage bei der jeweiligen Knoten- oder Kanteneinrichtung und/oder ein periodisches Scannen von abrufbaren Daten.

Beim Erfassen des mindestens einen Betriebsparameters wird ein jeweiliger Zeitpunkt in der Globalzeit des Netzwerks mit erfasst. Insbesondere wird der Betriebsparameter, mit einem Globalzeit-Zeitstempel versehen, der angibt, zu welchem Zeitpunkt in der Globalzeit des Netzwerks der Betriebsparameter erfasst wurde. Dadurch können die erfassten und gespeicherten Betriebsparameter, z.B. chronologisch, geordnet werden.

Das Speichern des Adresselements, des Inhaltselements und des mindestens einen weiteren Inhaltselements erfolgt in einer Datenbankeinrichtung als eine tensorielle Datenstruktur, welche insbesondere als Objekt in einer entsprechend strukturierten Datenbank abgelegt ist.

Im Folgenden wird die abgespeicherte tensorielle Datenstruktur auch als auch tensorielle Datenbankstruktur bezeichnet. Die tensorielle Datenbankstruktur bezieht sich auf eine mehrdimensionale Datenbankstruktur mit mindestens drei linear voneinander unabhängigen Dimensionen oder Freiheitsgraden. Im vorgeschlagenen Verfahren wird der mindestens eine Betriebsparameter in Abhängigkeit von einer Globalzeit und einer Koppelung des jeweiligen Knotenpaares erfasst. Mit dem Typ des erfassten Betriebsparameters ergeben sich drei Dimensionen oder Freiheitsgrade. Die Zuweisung sowie das Speichern des erfassten Betriebsparameters als ein Inhaltselement erfolgt also in Abhängigkeit von dem Vorhandensein einer Kopplung des jeweiligen Knotenpaares, dem Globalzeit-Zeitpunkt und dem Typ des Betriebsparameters.

Gemäß einer weiteren Ausführungsform stellt mindestens ein Teil der Knoteneinrichtungen oder Kanteneinrichtungen den mindestens einen Betriebsparameter und den zugehörigen Globalzeit-Zeitpunkt gemäß der tensoriellen Datenbankstruktur bereit.

Eine oder mehrere Knoteneinrichtungen und/oder Kanteneinrichtungen können den erfassten Betriebsparameter derart verarbeiten und/oder dem jeweiligen Adresselement zuordnen, dass es mit der tensoriellen Datenbankstruktur konform ist.

Der Globalzeit-Zeitpunkt des erfassten Betriebsparameters, vorzugsweise in Form eines Globalzeit-Zeitstempels, wird lokal mit dem jeweiligen Betriebsparameter verknüpft. Ferner kann eine Serie des erfassten Betriebsparameters erstellt werden, indem der Betriebsparameter in einem Zeitintervall periodisch oder wiederholt erfasst und gespeichert wird. Hierzu kann die Kanteneinrichtung und/oder die Knoteneinrichtung eine Speichereinheit aufweisen.

Hierzu kann die Knoteneinrichtung und/oder Kanteneinrichtung eine Recheneinheit aufweisen, die den erfassten Betriebsparameter dem jeweiligen Adresselement zuordnen und gegebenenfalls bearbeiten kann. Dadurch kann eine lokale Rechenleistung ausgenutzt werden.

Gemäß einer weiteren Ausführungsform umfasst das Verfahren ferner:
- Erfassen eines Satzes von verschiedenen Betriebsparametern; und
- Speichern der verschiedenen Betriebsparameter als weitere Inhaltselemente in Abhängigkeit von dem jeweiligen Adresselement, dem die weiteren Inhaltselemente zugewiesen sind.

Es werden mehrere Betriebsparameter als ein Satz von verschiedenen Betriebsparametern erfasst. Vorzugsweise gibt der Satz von verschiedenen Betriebsparametern eine Reihenfolge der verschiedenen Betriebsparameter vor. Dadurch kann eine einheitliche Zuweisung der Betriebsparameter als weitere Inhaltselemente zu dem jeweiligen Adresselement in einer mehrdimensionalen Datenbankstruktur erfolgen.

Insbesondere können die erfassten Betriebsparameter als der Satz von verschiedenen Betriebsparametern auf diese Weise der tensoriellen Datenbankstruktur angepasst werden.

Gemäß einer weiteren Ausführungsform charakterisiert der mindestens eine Betriebsparameter einen Verkehrsfluss, einen Stromfluss, einen Materialfluss, einen Energiefluss, eine Leistungsaufnahme und/oder einen Versorgungsweg.

Charakterisieren bezieht sich beispielsweise auf ein Beschreiben von Eigenschaften, Quantisieren von Faktoren und Einflüssen, Kennzeichnen von Merkmalen oder Wiedergeben von für das Netzwerk typischen physikalischen Größen. Dementsprechend kann der mindestens eine Betriebsparameter zumindest teilweise einen Betriebszustand des Netzwerks wiedergeben.

Gemäß einer weiteren Ausführungsform erfolgt das Erfassen des Globalzeit-Zeitpunkts mit Hilfe von Satelliten, insbesondere eines GPS-Systems.

Dementsprechend kann die Globalzeit des Netzwerks satellitengestützt und/oder auf einem GPS-System basieren. Die erfassten Betriebsparameter werden mit einem Zeitstempel gemäß einer satellitenbasierten Globalzeit und/oder einer GPS-Zeit versehen.

Gemäß einer weiteren Ausführungsform erfasst und/oder speichert mindestens ein Teil der Knoteneinrichtungen und/oder Kanteneinrichtungen den mindestens einen Betriebsparameter in Abhängigkeit von dem zugewiesenen Adresselement.

Das Erfassen und/oder Speichern des mindestens einen Betriebsparameters erfolgt demnach lokal bei mindestens einer Knoteneinrichtung und/oder Kanteneinrichtung. Insbesondere wird der erfasste und/oder gespeicherte Betriebsparameter lokal dem jeweiligen Adresselement zugewiesen. Dadurch kann dieser Betriebsparameter einer mehrdimensionalen Datenbankstruktur, insbesondere einer tensoriellen Datenbankstruktur, kompatibel gemacht werden.

Insbesondere erfolgt das lokale Erfassen, Verarbeiten und/oder Speichern der Betriebsparameter an den Knoteneinrichtungen basierend auf den Prinzipien des Resilient Distributed Datasets (RDD). Die erfassten Betriebsparameter können in Untergruppen von Betriebsparametern unterteilt sein, wobei für jede Untergruppe eine jeweilige Verarbeitungsmethode existiert und/oder eine Abhängigkeit von anderen Untergruppen definiert ist.

Gemäß einer weiteren Ausführungsform erfolgt das Steuern durch den mindestens einen Teil der Knoteneinrichtungen und/oder Kanteneinrichtungen selbst.

Insbesondere automatisierte Knoten- und/oder Kanteneinrichtungen können die Betriebsparameter selbst auswerten und auf diese reagieren. Dadurch kann ein Automatisierungsgrad des Netzwerks weiter gesteigert werden, da noch weniger menschlicher Eingriff erforderlich ist.

Gemäß einer weiteren Ausführungsform erfolgt das Koppeln jeder Knoteneinrichtung mit mindestens einer anderen Knoteneinrichtung in Abhängigkeit von den gespeicherten Inhaltselementen.

Die als Inhaltselemente gespeicherten Betriebsparameter können Informationen über eine vorteilhafte Kopplung der Knoteneinrichtungen des Netzwerks geben. Das Netzwerk könnte in Abhängigkeit von den erfassten Betriebsparametern gestaltet und/oder umgestaltet werden.

Gemäß einer weiteren Ausführungsform umfasst das Verfahren ferner:
- Bestimmen eines Referenzwertes für einen der mindestens einen Betriebsparameter;
- Berechnen eines relativen Betriebsparameters in Abhängigkeit von dem erfassten Betriebsparameter und dem zugehörigen Referenzwert; und
- Speichern des relativen Betriebsparameters in Abhängigkeit von dem Adresselement, dem der erfasste Betriebsparameter zugewiesen ist.

Das Netzwerk kann einen Referenzwert für mindestens einen Betriebsparameter aufweisen. Das Erfassen des Betriebsparameters und/oder das Zuweisen des erfassten Betriebsparameters als ein weiteres Inhaltselement zu einem Adresselement können in Abhängigkeit von dem Referenzwert erfolgen.

Gemäß einem zweiten Aspekt wird ein Netzwerk mit mehreren Knoteneinrichtungen vorgeschlagen, das geeignet ist, das oben beschriebene Verfahren auszuführen.

Gemäß einer weiteren Ausführungsform ist das Netzwerk für einen Transport oder eine Übertragung von Ressourcen, Material, Strom, Energie und/oder Verkehr geeignet.

Gemäß einer weiteren Ausführungsform umfasst das Netzwerk ferner eine Datenbankeinrichtung und eine Recheneinheit. Die Datenbankeinrichtung kann Adresselemente und mindestens einen Betriebsparameter von Knotenpaaren aus zwei Knoteneinrichtungen, die mit Hilfe einer jeweiligen Kanteneinrichtung miteinander koppelbar sind, speichern. Die Recheneinheit kann mindestens ein Inhaltselement zu dem jeweiligen Adresselement zuweisen und das Adresselement oder das mindestens eine Inhaltselement abrufen.

Vorzugsweise kann die Datenbankeinrichtung das Adresselement sowie ein oder mehrere Inhaltselemente in einer mehrdimensionalen, insbesondere tensoriellen, Datenbankstruktur speichern.

Gemäß einer weiteren Ausführungsform umfasst das Netzwerk ferner eine Benutzerschnittstelle zum Anzeigen des gespeicherten Adresselements und des mindestens einen gespeicherten Inhaltselements für einen Betreiber des Netzwerks.

Dadurch kann der Betreiber des Netzwerks trotz der Automatisierung des Netzwerks auf Ereignisse manuell reagieren und/oder die Kanten- und Knoteneinrichtungen manuell steuern.

Die jeweilige Einheit, zum Beispiel Recheneinheit, Datenbankeinrichtung, Kontrolleinheit, Kanteneinrichtungen und Knoteneinrichtungen, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für die vorgeschlagene Vorrichtung beschriebenen Ausführungsformen und Merkmale gelten für das vorgeschlagene Verfahren entsprechend und umgekehrt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt eine schematische Ansicht eines Stromnetzes als Beispiel für ein Netzwerk;
- Fig. 2: zeigt eine schematische Ansicht eines Kraftwerks als Beispiel einer Knoteneinrichtung des Stromnetzes in Fig. 1;
- Fig. 3: zeigt ein Flussdiagramm eines Verfahrens zum Betreiben eines Netzwerks;
- Fig. 4: zeigt eine schematische Ansicht einer Topologieebene;
- Fig. 5: zeigt eine schematische Ansicht einer mehrdimensionalen Datenbankstruktur;
- Fig. 6: zeigt eine zur Erläuterung des Erfassens und Speicherns von Inhaltselementen in einer tensoriellen Datenbankstruktur;
- Fig. 7: illustriert eine erste Ausführungsform eines Verfahrens zum Verarbeiten von Betriebsparametern in Inhaltselemente für eine tensorielle Datenbankstruktur;
- Fig. 8: illustriert eine zweite Ausführungsform eines Verfahrens zum Verarbeiten von Betriebsparametern in Inhaltselemente für eine tensorielle Datenbankstruktur; und
- Fig. 9: zeigt eine Darstellung einer Ebene aus einer tensoriellen Datenbankstruktur.

In den Figuren sind gleiche oder funktionsgleiche Elemente mit denselben Bezugszeichen versehen worden, sofern nichts anderes angegeben ist.

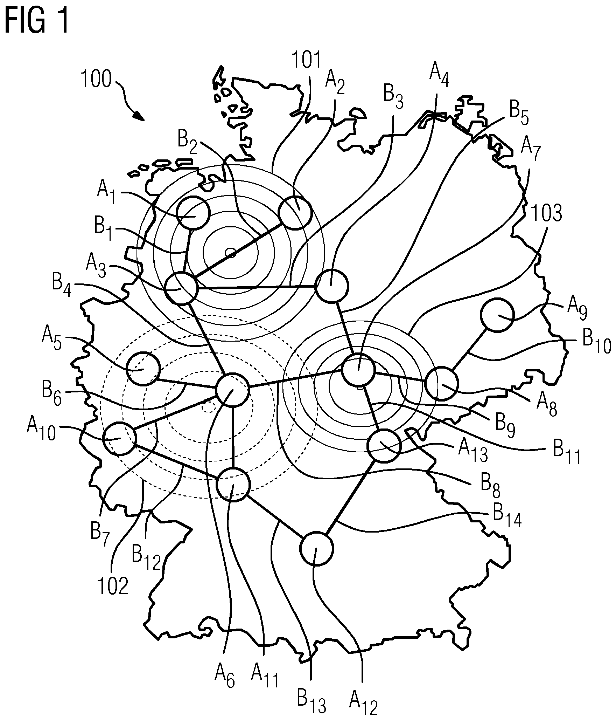

Fig. 1 zeigt eine schematische Ansicht eines Stromnetzes 100 als ein Beispiel für ein Netzwerk.

Das Stromnetz 100 umfasst mehrere Knoteneinrichtungen A₁ - A₁₃, die als Kraftwerke, Umspannwerke, Verbrauchernetze und/oder Transformatoren ausgeführt sind. Jede der Knoteneinrichtungen A₁ - A₁₃ ist mit mindestens einer anderen Knoteneinrichtung A₁ - A₁₃ mit Hilfe einer jeweiligen Stromleitung B₁ - B₁₄ gekoppelt. Die Stromleitungen B₁ - B₁₄ entsprechen Kanteneinrichtungen des Stromnetzes 100. Die Knoteneinrichtungen A₁ - A₁₃ sind unterschiedlich voneinander entfernt, wobei ein Abstand zwischen zwei miteinander gekoppelten Knoteneinrichtungen A₁ - A₁₃ einige km bis mehrere Hundert km betragen kann.

In einem weiteren Ausführungsbeispiel kann das in Fig. 1 schematisch dargestellte Netzwerk ein Verkehrsnetz sein, wobei die Kanteneinrichtungen B₁ - B₁₄ Straßenabschnitte und die Knoteneinrichtungen A₁ - A₁₃ Verkehrskontrollstationen sind. Im Folgenden wird das Stromnetz 100 betrachtet.

Die Entscheidung, ob zwei Knoteneinrichtungen A₁ - A₁₃ miteinander gekoppelt werden, hängt von diversen inneren wie äußeren Faktoren ab. Die inneren Faktoren sind insbesondere Betriebsparameter der Knoten- oder Kanteneinrichtungen A₁ - A₁₃, B₁ - B₁₄. Zu den äußeren Einflüssen zählen unter anderem eine Entfernung, eine geographische Lage, eine politische Lage, eine Infrastruktur, ein Versorger-Abnehmer-Verhältnis und eine wirtschaftlichen Situation. Beispielsweise sind die Knoteneinrichtungen A₂, A₄, nicht miteinander gekoppelt, obgleich sie eine relativ geringe Entfernung voneinander im Vergleich zu anderen Knoteneinrichtungen aufweisen.

Je nach Art der Knoteneinrichtungen A₁ - A₁₃, die mit Hilfe einer jeweilige Kanteneinrichtung B₁ - B₁₄ miteinander gekoppelt sind, variiert eine angelegte Spannung an der Kanteneinrichtung B₁ - B₁₄. Beispielsweise kann an einer Kanteneinrichtung B₁ - B₁₄, welche ein Kraftwerk mit einem Umspannwerk verbindet, eine Hochspannung von 220 - 380 kV anliegen. An Kanteneinrichtungen, welche ein Umspannwerk mit einem Verbrauchernetz als Knoteneinrichtungen A₁ - A₁₃ verbinden, kann eine Mittelspannung von 1 - 50 kV anliegen. An Kanteneinrichtungen B₁ - B₁₄, die einzelne Verbraucher miteinander oder mit einem Transformator als Knoteneinrichtungen A₁ - A₁₃ verbinden, kann eine Niederspannung von mehreren 100 V anliegen. Die Spannung ist ein Beispiel für einen Betriebsparameter mit den Knoteneinrichtungen als Messpunkte.

Eine erste Gruppe 101 von konzentrischen Kreisen kennzeichnet ein erstes Ereignis E1, wobei ein kleinster Kreis der Gruppe 101 ein Epizentrum, und ein größter Kreis der Gruppe 101 einen maximalen Wirkungsbereich des ersten Ereignisses E1 angibt.

Eine zweite Gruppe 102 und eine dritte Gruppe 103 von konzentrischen Kreisen kennzeichnen jeweils ein zweites und ein drittes Ereignis E2, E3, wobei ein jeweiliger kleinster Kreis das Epizentrum kennzeichnet und ein größter Kreis einen maximalen Wirkungsbereich des jeweiligen Ereignisses E2, E3 kennzeichnet. Die Ereignisse können eine Störung, ein Naturereignis (z.B. ein Sturm, ein Erdbeben, usw.), einen Unfall und/oder einen sonstigen inneren oder äußeren Faktor umfassen, die den Betrieb des Stromnetzes 100 beeinflussen.

Tritt eines der Ereignisse E1 - E3 auf, so kann mindestens einer der Betriebsparameter an den Knoteneinrichtungen A₁ - A₁3 und/oder Kanteneinrichtungen B₁ - B₁₄ von einem Wert eines ungestörten Zustands abweichen, d.h. ungewöhnliche Fluktuationen zeigen, abfallen oder ansteigen. Dabei ist die Auswirkung des Ereignisses E1 - E3 auf die Betriebsparameter der Knoteneinrichtungen A₁ - A₁3 und Kanteneinrichtungen B₁ - B₁4 stärker, je näher sich die jeweilige Knoteneinrichtung A₁ - A₁3 oder Kanteneinrichtung B₁ - B₁₄ an dem Epizentrum des stattfindenden Ereignisses E1- E3 befindet. Wenn mehrere Ereignisse E1 - E3 gleichzeitig stattfinden, wie es in Fig. 1 dargestellt ist, überlappen die Wirkungsbereiche der Ereignisse E1 - E3. Zum Beispiel, die Kanteneinrichtung B₄ liegt im Wirkungsbereich sowohl des ersten Ereignisses E1 als auch des zweiten Ereignisses E2.

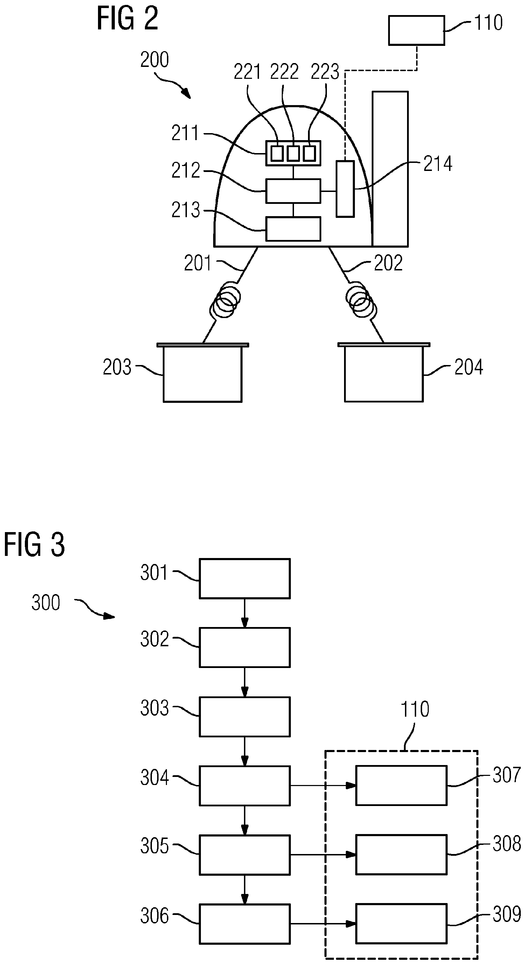

Das Stromnetz 100 weist eine Datenbankeinrichtung 110 auf (s. Fig. 2), in welcher die erfassten Betriebsparameter als Inhaltselemente in Abhängigkeit von Kopplungen der Knoteneinrichtungen A₁ - A₁₃ miteinander gespeichert sind. Ein Ereignis E1 - E3, zum Beispiel eine Störung, kann anhand der in der Datenbankeinrichtung 110 gespeicherten und abrufbaren Inhaltselemente zeitnah und mit einer hohen Ortsauflösung erfasst werden. Dadurch kann der Betreiber des Stromnetzes 100 schnell und effizient auf die äußeren Einflüsse reagieren.

Fig. 2 zeigt eine schematische Ansicht eines Kraftwerks 200 als eine Knoteneinrichtung oder ein Messpunkt des Stromnetzes 100 in Fig. 1.

Das Kraftwerk 200 ist eine der Knoteneinrichtungen A₁ - A₁₃ des Stromnetzes 100. Das Kraftwerk 200 ist mit Hilfe von jeweils einer Stromleitung 201, 202 mit zwei Umspannwerken 203, 204 als weiteren Knoteneinrichtungen des Stromnetzes 100 gekoppelt. Das Kraftwerk 200 speist Strom und elektrische Leistung in das Stromnetz 100 ein. Das Kraftwerk 200 kommuniziert mit einem GPS-System, das insbesondere eine Globalzeit für das Stromnetz 100 vorgibt.

Das Kraftwerk 200 weist eine Kontrolleinheit 211, eine Recheneinheit 212, eine Speichereinheit 213 und eine Kommunikationseinheit 214 auf. Die Kontrolleinheit 211 umfasst mehrere Sensoreinrichtungen 221 - 223, die jeweils eine Spannung, eine Frequenz und einen Phasenwinkel an dem Kraftwerk 200 erfassen. Ferner kann die Kontrolleinheit 211 eine Betriebstemperatur, eine Arbeitsauslastung und eine Verfügbarkeit(z.B. "Standby", "in Betrieb" oder "Wartungsarbeiten") als einen Betriebszustand erfassen.

Die Kontrolleinheit 211 erfasst die gemessene Spannung, die gemessene Frequenz, den gemessenen Phasenwinkel sowie den gemessenen Betriebszustand als einen Satz von Betriebsparametern und verknüpft den jeweiligen Betriebsparameter mit einem Zeitstempel, der angibt, wann im Zeitmaß der Globalzeit der jeweilige Betriebsparameter erfasst wurde. Ferner kann die Kontrolleinheit 211 eine Benutzerschnittstelle aufweisen, mittels welcher der Betreiber des Kraftwerks 200 und/oder des Stromnetzes 100 die erfassten sowie gespeicherten Betriebsparameter abrufen und visualisieren kann.

Die Recheneinheit 212 empfängt die erfassten Betriebsparameter sowie dem jeweiligen Zeitstempel von der Kontrolleinheit 211. Die Recheneinheit 212 verarbeitet die Betriebsparameter als Inhaltselemente, wie später in Details beschrieben wird. Die Inhaltselemente werden in der Speichereinheit 213 gespeichert oder wahlweise über die Kommunikationseinheit 214 an die zentrale Datenbankeinrichtung 110 des Stromnetzes 100 weitergeleitet.

Fig. 3 zeigt ein Flussdiagramm eines Verfahrens 300 zum Betreiben eines Netzwerks, wie z.B. des in Fig. 1 und 2 gezeigten Stromnetzes 100.

In einem ersten Schritt 301 wird jede Knoteneinrichtung A₁ - A₁₃ des Stromnetzes 100 mit einer anderen Knoteneinrichtung A₁ - A₁₃ des Stromnetzes 100 mit Hilfe einer jeweiligen Kanteneinrichtung B₁ - B₁₄ gekoppelt.

In einem nächsten Schritt 302 wird eine Globalzeit des Stromnetzes 100 für alle Knoten- und Kanteneinrichtungen A₁ - A₁₃, B₁ - B₁₄ des Stromnetzes 100 festgelegt. Insbesondere ist die Globalzeit satellitengestützt oder basiert auf einem GPS-System.

In einem nächsten Schritt 303 werden sowohl die Knoteneinrichtungen A₁ - A₁₃ als auch die Kanteneinrichtungen B₁ - B₁₄ des Stromnetzes 100 erfasst und registriert.

In einem nächsten Schritt 304 wird jedem Knotenpaar nₚ-n_{q}, d.h. einer Kombination aus zwei Knoteneinrichtungen nₚ und n_{q} des Stromnetzes 100, ein Adresselement (nₚ,n_{q}) zugewiesen. Das Adresselement (nₚ,n_{q}) wird mit zwei Indizes p, q versehen, wobei jeder der zwei Indizes p, q jeweils eine Knoteneinrichtung des Knotenpaares kennzeichnet. Zum Beispiel ist das Knotenpaar nₚ = A₁ und n_{q} = A₁₃, wie in Fig. 1 gezeigt ist, eine Kombination aus den Knoteneinrichtungen A₁ und A₁₃, der das Adresselement (nₚ,n_{q}) zugewiesen ist.

In einem darauffolgenden Schritt 305 wird ein Inhaltselement jedem Adresselement (nₚ,n_{q}) zugewiesen. Das Inhaltselement gibt an, ob eine Kopplung zwischen den Knoteneinrichtungen des Knotenpaares besteht oder nicht. Der Wert des Inhaltselements kann zum Beispiel binär sein. Das Inhaltselement kann in Abhängigkeit der Knoteneinrichtungen, deren Kopplung der Inhalt des Inhaltselements ist, graphisch dargestellt werden. Daraus ergibt sich eine zweidimensionale Tabelle oder eine Matrix, die eine Topologie des Netzwerks, insbesondere des Stromnetzes 100, wiedergibt. Die zweidimensionale Tabelle wird zum Beispiel als Topologieebene bezeichnet.

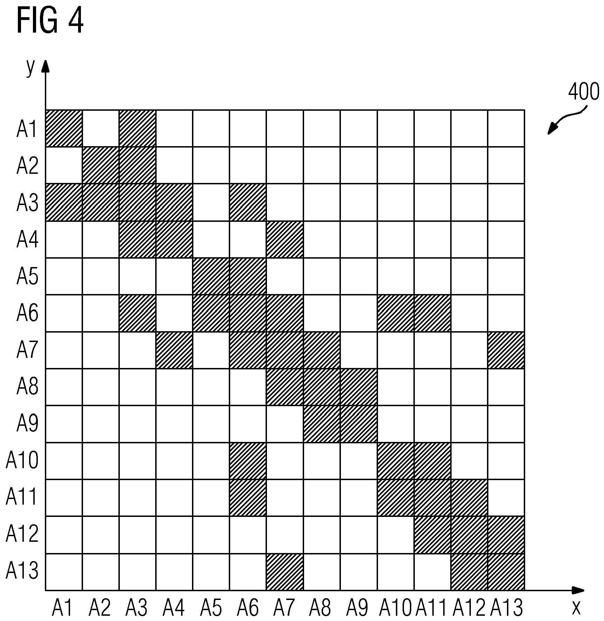

Fig. 4 zeigt eine schematische Ansicht einer Topologieebene 400, die Kopplungen von Knoteneinrichtungen A₁ - A₁₃ des Stromnetzes 100 in Fig. 1 veranschaulicht.

Die Topologieebene 400 ist in Form einer zweidimensionalen Tabelle 400 angegeben. In x- und y-Richtung sind jeweils die Indizes p, q, welche einer jeweiligen Knoteneinrichtung A₁ - A₁₃ des Stromnetzes 100 zugeordnet sind, des jeweiligen Adresselements aufgetragen. Die gefüllten Zellen der Tabelle 400 indizieren, dass die entsprechenden Knoteneinrichtungen A₁ - A₁₃ des Stromnetzes 100 mit Hilfe einer jeweiligen Stromleitung B₁ - B₁₄ als Kanteneinrichtung miteinander gekoppelt sind.

Die Tabelle 400 veranschaulicht somit eine Topologie des Stromnetzes 100. Die Einträge, die den Inhaltselementen entsprechen, in der Tabelle 400 können binär sein und z.B. einen Wert von 0 oder 1 aufweisen. Beispielsweise nimmt das Inhaltselement der Zelle (A₇,A₁₃) den Wert 1 an und zeigt, dass die Knoteneinrichtungen A₇, A₁₃ miteinander gekoppelt sind. Also liegt eine Kanteneinrichtung zwischen den Knoteneinrichtungen A₇, A₁₃ vor. Die Einträge in der Tabelle 400 können höherbitwertig (z.B. 8-, 16-, 32- oder 64-bitwertig) sein, um eine Kopplungsart zu kennzeichnen. Die Einträge können ferner bezüglich einer Diagonale der Tabelle, insbesondere der Topologieebene, nicht symmetrisch sein und eine Richtungsabhängigkeit der Kopplungen zwischen den Knoteneinrichtungen A₁ - A₁₃ anzeigen. Dabei kann beispielsweise der erste Index des jeweiligen Eintrags eine Anfangsknoteneinrichtung angeben, während der zweite Index des Inhaltselements eine Zielknoteneinrichtung angibt.

In einem weiteren Schritt 306 werden mehrere Betriebsparameter für mindestens ein ausgewähltes Knotenpaar np-nq oder für eine ausgewählte Knoteneinrichtung A₁ - A₁₃ erfasst. Insbesondere werden die Betriebsparameter an den Kanteneinrichtungen B₁ - B₁₄, d.h. zwischen zwei gekoppelten Knoteneinrichtungen A₁ - A₁₃, mit Hilfe einer jeweiligen Sensoreinrichtung gemessen, wie es in Fig. 2 gezeigt ist. Beispielsweise erfasst die Sensoreinrichtung 222 eine Frequenz des eingespeisten Stroms als Betriebsparameter.

Das zugewiesene Adresselement wird in einem Schritt 307 in eine Datenbankeinrichtung 110 eingeschrieben. Das Inhaltselement wird in einem Schritt 308 in Abhängigkeit von dem Adresselement in der Datenbankeinrichtung 110 gespeichert. Die Betriebsparameter werden in einem weiteren Schritt 309 als weitere Inhaltselemente in Abhängigkeit von dem jeweiligen Adresselement gespeichert.

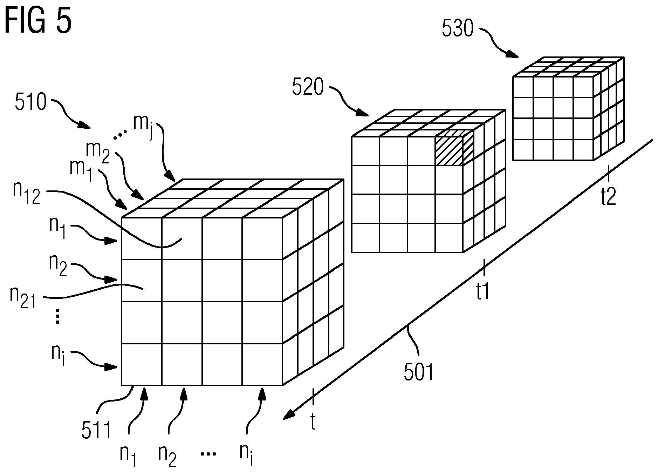

Die gespeicherten Adresselemente sowie Inhaltselemente können in einer mehrdimensionalen Datenbankstruktur abgelegt sein. Fig. 5 zeigt eine schematische Ansicht einer mehrdimensionalen Datenbankstruktur 510 - 530, die geeignet ist.

Die an den Kanten- oder Knoteneinrichtungen erfassten Betriebsparameter werden in einer mehrdimensionalen Datenbankstruktur 510 - 530 als Inhaltselemente in einer Datenbankeinrichtung des jeweiligen Netzwerks abgespeichert. Ein Satz von Knoteneinrichtungen n₁ - nᵢ entspricht sowohl einer ersten Dimension als auch einer zweiten Dimension der mehrdimensionalen Datenbankstruktur 510 - 530. Eine dritte Dimension der mehrdimensionalen Datenbankstruktur 510 - 530 ist durch verschiedene Betriebsparametertypen m₁ - mⱼ gegeben. Die Betriebsparametertypen m₁ - mⱼ umfassen beispielsweise eine Spannung, eine Frequenz, einen Phasenwinkel und einen Betriebszustand der Knoteneinrichtungen n₁ - ni eines Stromnetzes. Eine vierte Dimension der mehrdimensionalen Datenbankstruktur 510 - 530 ist durch die Globalzeit t gegeben, die durch eine Achse 501 dargestellt ist. Ein Tensor und somit eine tensorielle Datenbankstruktur wird durch mindestens drei voneinander linear unabhängige Dimensionen ausgebildet. Die mehrdimensionale Datenbankstruktur 510 - 530 ist als eine tensorielle Datenbankstruktur ausgebildet. Drei Tensoren 510 - 530 stellen dabei die tensorielle Datenbankstruktur zu unterschiedlichen Zeitpunkten t, t₁ und t₂ dar. Zu jedem Zeitpunkt liegt ein Tensor 510 - 530 mit den Betriebsparametern vor.

Die Topologieebene 511, die eine Topologie des Netzwerks angibt, bildet eine Ebene in der mehrdimensionalen Datenbankstruktur 510 - 530. Vorzugsweise ist die Topologieebene 511 eine erste Ebene des jeweiligen Tensors 510 - 530, wie es in Fig. 5. gezeigt ist. Die Topologieebene 511 zeigt an, ob und wie die Knoteneinrichtungen n₁ - n₁ miteinander gekoppelt sind. Beispielsweise ist die Topologieebene 511 entsprechend der zweidimensionalen Tabelle 400 aufgebaut, wie es in Fig. 4 angedeutet ist.

Die erfassten Betriebsparameter werden jeweils einem Knotenpaar, d.h. einem Paar aus zwei Knoteneinrichtungen n₁ - nᵢ, die miteinander gekoppelt oder koppelbar sind, zugeordnet. Wenn zwei Knoteneinrichtungen n₁ und n₂ miteinander gekoppelt sind, erfolgt ein entsprechender Eintrag (z.B. "1") in die Zellen n₁₂ und n₂₁ in der Topologieebene 511. Ein erster Betriebsparametertyp m₁ stellt beispielsweise eine Spannung dar. Die erfasste Spannung zwischen den Knoteneinrichtungen n₁ und n₂ wird in die Zellen m_{1,12} und m_{1,21} in der Ebene m₁ eingetragen. Vorzugsweise sind die Zellen m_{1,12} und n₁₂ der Topologieebene 511 entsprechend angeordnet und befinden sich parallel zu den Einträgen in der Topologieebene 511 bezüglich der dritten Dimension m₁ - mⱼ.

Weitere Inhaltselemente der Betriebsparametertypen m₂ - mⱼ werden entsprechend in die tensorielle Datenbankstruktur eingetragen. Insgesamt erfolgt das Eintragen der Betriebsparameter in die tensorielle Datenbankstruktur 510 - 530 abhängig von Kopplungen der Knoteneinrichtungen n₁ - n₁ miteinander. Bei einer nicht bestehenden Kopplung zwischen zwei Knoteneinrichtungen n₁ - n₁ erfolgt kein Eintrag der Betriebsparameter m₁ - mⱼ. Daher ist es nicht notwendig, die Zellen der tensoriellen Datenbankstruktur 510 - 530 vollständig zu füllen. Dadurch kann eine Speicherkapazität der tensoriellen Datenbankstruktur besser ausgenutzt werden. Dabei wird der globale Zeitstempel dem jeweiligen Inhaltselement zugeordnet und mitgespeichert.

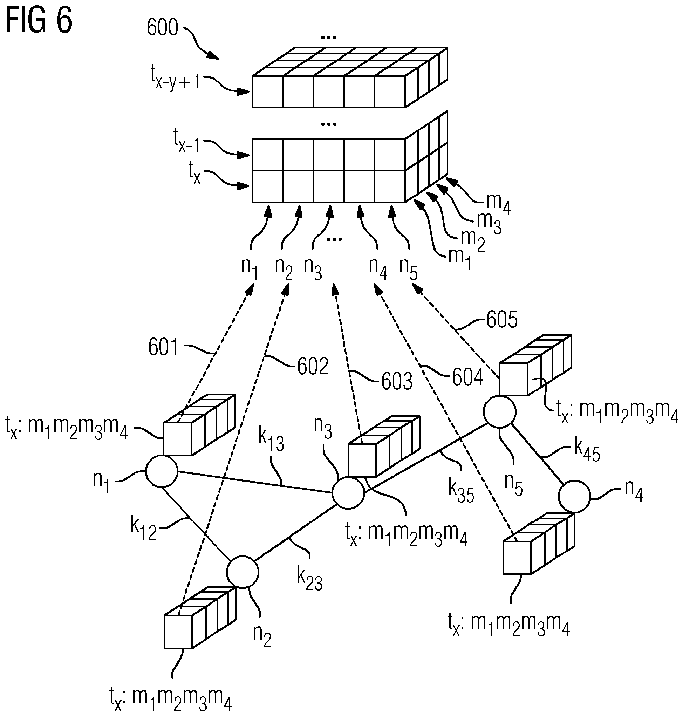

Fig. 6 zeigt eine Darstellung zur Erläuterung einer Variante des Erfassens und Speicherns von Inhaltselementen in eine tensorielle Datenbankstruktur 600.

Die Pfeile 601 - 605 symbolisieren jeweils das Speichern von Betriebsparametern, die an einer jeweiligen Knoteneinrichtung n₁ - n₅ zum Zeitpunkt tₓ in der Globalzeit erfasst werden, als Inhaltselemente in der Datenbankstruktur 600.

Jede der Knoteneinrichtungen n₁ - n₅ ist mit mindestens einer anderen Knoteneinrichtung der Knoteneinrichtungen n₁ - n₅ mit Hilfe einer jeweiligen Kanteneinrichtung k₁₁ - k₄₅ miteinander gekoppelt. Beispielsweise koppelt die Kanteneinrichtung k₁₂ die Knoteneinrichtungen n₁, n₂ miteinander.

In Fig. 6 ist die gemäß Fig. 5 zweite Dimension der tensoriellen Datenbankstruktur 600 für eine dreidimensionale Darstellung unterdrückt. Die Knoteneinrichtungen n₁ - n₅ erfassen einen Satz von verschiedenen Betriebsparametern m₁ - m₄ in Abhängigkeit von der Zeit t. Zum Zeitpunkt tₓ werden die Betriebsparameter m₁ - m₄ von den jeweiligen Knoteneinrichtungen n₁ - n₅ zum Eintragen in die tensorielle Datenbankstruktur 601 verarbeitet.

Die Betriebsparameter m₁ - m₄, die an der Knoteneinrichtung n₁ zum Zeitpunkt tₓ erfasst werden, sind Betriebsparameter, die die Kopplung zwischen den Knoteneinrichtungen n₂ und n₃ betreffen. Entsprechendes gilt für die an der Knoteneinrichtung n₂ erfassten Betriebsparameter m₁ - m₄, die von der Kopplung n₁-n₃ zwischen den Knoteneinrichtungen n₁-n₃ stammen. Die an der Knoteneinrichtung n₃ erfassten Betriebsparameter m₁ - m₄ betreffen die Kopplungen k₁₃, k₂₃, k₃₅.

Die an der Knoteneinrichtung n₅ erfassten Betriebsparameter m₁ - m₄ betreffen die Kopplungen k₃₅, k₄₅. Die Knoteneinrichtung n₄ ist einzig mit der Knoteneinrichtung n₅ gekoppelt. Die an der Knoteneinrichtung n₄ erfassten Betriebsparameter m₁ - m₄ betrifft die Kopplung k₄₅.

Die zum Zeitpunkt tx an den Knoteneinrichtungen n₁ - n₅ erfassten Betriebsparameter m₁ - m₄ werden entweder lokal an den jeweiligen Knoteneinrichtungen n₁ - n₅ oder zentral in Inhaltselemente für die Eintragung in die tensorielle Datenbankstruktur 600 verarbeitet. Zu diesem Zweck werden eine Analyse und eine Abstraktion der erfassten Betriebsparameter durchgeführt.

Insbesondere erfolgt ein Vorverarbeiten, eine Vorauswertung und eine Voranalyse der Betriebsparameter lokal durch die jeweilige Knoteneinrichtung n₁ - n₅. Dadurch kann eine Datenmenge der Inhaltselemente für die tensorielle Datenbankstruktur 600 reduziert werden. Dabei kann ferner eine lokale Rechenkapazität der Knoteneinrichtungen n₁ - n₅ genutzt werden.

In der tensoriellen Datenbankstruktur 600 werden die Inhaltselemente in Abhängigkeit von Kopplungen der Knoteneinrichtungen n₁ - n₅ miteinander, von den Betriebsparametertypen und von der Zeit gespeichert. Die Inhaltselemente der tensoriellen Datenbankstruktur 601 können kontinuierlich, periodisch und/oder dann, wenn eine Änderung der Betriebsparameter stattfindet, aktualisiert werden.

Die erfassten Betriebsparameter m₁ - m₄ können lokal bei jeder der Knoteneinrichtungen n₁ - n₅ und zentral bei einer Datenbankeinrichtung mit der tensoriellen Datenbankstruktur 601 angezeigt werden.

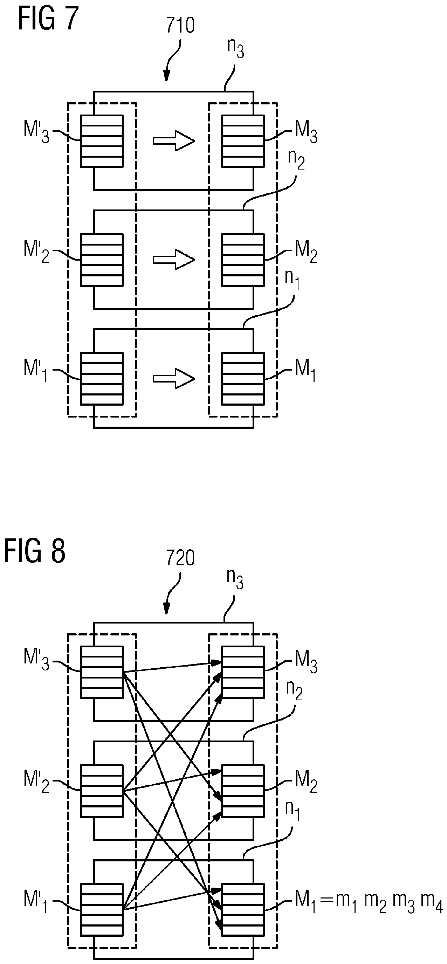

Fig. 7 und Fig. 8 erläutern jeweils das Vorverarbeiten von Daten an den Knoteneinrichtungen. Fig. 7 illustriert dazu eine erste Ausführungsform 710 und Fig. 8 eine zweite Ausführungsform 720 eines Verfahrens zum Verarbeiten von Betriebsparametern in Inhaltselemente für eine tensorielle Datenbankstruktur.

Fig. 7 zeigt die Knoteneinrichtungen n₁ - n₃, die jeweils einen Satz von Betriebsparametern M'₁ - M'₃ erfassen. Die an den Knoteneinrichtungen n₁ - n₃ erfassten Betriebsparameter sind unabhängig voneinander und gegebenenfalls nicht zum Speichern in der tensoriellen Datenbankstruktur geeignet. Daher erfolgt, wie durch den jeweiligen Pfeil angedeutet, eine Vorverarbeitung der erfassten Betriebsparameter in Inhaltselemente m₁ - m₄ in der tensoriellen Datenbankstruktur. Dabei ist Mᵢ = m₁ - m₄.

In Fig. 8 werden die erfassten Betriebsparameter M'₁ - M'₃ in Inhaltselemente m₁ - m₄ der tensoriellen Datenbankstruktur vorverarbeitet, wobei die Inhaltselemente m₁ - m₄ lokal an miteinander gekoppelte Knoteneinrichtungen n₁ - n₃ verteilt abgelegt sind. Man kann von einem verteilten Speicher sprechen.

In Ausführungsformen bedient man sich bekannte RDD (Resilient Distributed Datasets) Verfahren zum Verteilen und effizienten Speichern von Betriebsparametern. Es ist auch denkbar, dass Teiltensoren, wie sie in Fig. 5 dargestellt sind, verteilt in dem Netzwerk abgespeichert werden.

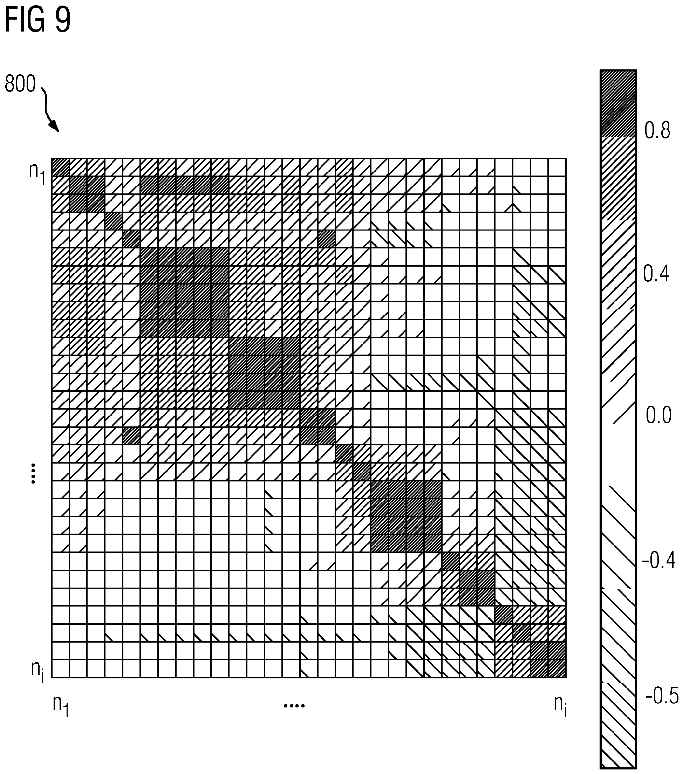

Fig. 9 zeigt eine Darstellung einer Ebene 800 aus einer tensoriellen Datenbankstruktur, wie z.B. beim Betreiben des Stromnetzes 100 in Fig. 1.

Jede Zelle in der Ebene 800 entspricht einer Kopplung von zwei Knoteneinrichtungen eines Stromnetzes, die auf einer horizontalen Achse und einer vertikalen Achse aufgelistet sind. Eine Verfärbung in jeder der Zellen entspricht einer Korrelation eines spezifischen Betriebsparameters, der an den zwei Knoteneinrichtungen, auf die sich die jeweilige Zelle bezieht, erfasst sind. Beispielsweise bedeutet eine starke Verfärbung eine gute Korrelation einer Frequenz, die an den jeweiligen Knoteneinrichtungen erfasst wurde. Die Korrelation kann hierbei aus einer Korrelationsfunktion, einer Differenz, einem Quotienten und/oder einer Kombination davon ermittelt werden.

Die tensorielle Datenbankstruktur ermöglicht eine graphische Darstellung eines Betriebszustandes des Netzwerks anhand von Betriebsparametern der Knoteneinrichtungen desselben. Dazu ist beispielsweise ein Automatisierungsnetzwerk mit einer Anzeigeeinrichtung versehen, die derartige "Heatmap"-Darstellungen, wie in Fig. 9 gezeigt, des Betriebszustandes des Netzwerks ausgibt. Dadurch wird das betreiben und Steuern sowie nachträgliche Fehlanalyse und dergleichen erleichtert.

Beim Vorliegen eines Ereignisses reagieren die an den Knoteneinrichtungen erfassten Betriebsparameter abhängig von einem Abstand von dem Ereignis unterschiedlich. Die Reaktionen der Betriebsparameter setzen sich über Kopplungen von Knoteneinrichtungen fort und werden an den gekoppelten Knoteneinrichtungen ebenfalls erkennbar. Mit Hilfe der Ebene 800 können derartige Reaktion in einer Übersicht veranschaulicht werden. Dadurch kann das Ereignis schnell und effizient lokalisiert und analysiert werden.

Obwohl die vorliegende Erfindung anhand von Ausführungsbeispielen beschrieben wurde, ist sie vielfältig modifizierbar. Insbesondere sind das Netzwerk 100 sowie das beschriebene Verfahren auf weitere Netzwerke mit Knoten- und Kanteneinrichtungen anwendbar. Insbesondere kann das Netzwerk 100 eine Herstellungsanlage, ein Versorgungsnetzwerk oder ein Logistiknetzwerk sein. Die Knoteneinrichtungen eines Netzwerks können Feldgeräte und/oder Messpunkte sein. Der Begriff Kopplung betrifft die Funktion einer Kanteneinrichtung.

## Patentansprüche

1. Verfahren zum Betreiben eines Netzwerks mit mehreren Knoteneinrichtungen, umfassend:
Koppeln (301) jeder Knoteneinrichtung (A₁ - A₁₃) mit mindestens einer anderen Knoteneinrichtung (A₁ - A₁₃) mit Hilfe einer jeweiligen Kanteneinrichtung (B₁ - B₁₄);
Festlegen (302) einer Globalzeit (t) für alle Knoteneinrichtungen (A₁ - A₁₃) und Kanteneinrichtungen (B₁ - B₁₄) ;
Erfassen (303) der Knoteneinrichtungen (A₁ - A₁₃) ;
Erfassen (303) der Kanteneinrichtungen (B₁ - B₁₄);
Zuweisen (304) eines Adresselements (nₚ,n_{q}) zu jedem Knotenpaar nₚ-n_{q} aus zwei Knoteneinrichtungen (A₁ - A₁₃), die mit Hilfe einer Kanteneinrichtung (B₁ - B₁₄) miteinander koppelbar sind;
Speichern (307) der Adresselemente (nₚ,n_{q});
Zuweisen (305) eines Inhaltselements (M₁ - M₃) zu jedem Adresselement (nₚ,n_{q}), wobei das Inhaltselement das Vorhandensein oder Nichtvorhandensein einer Kanteneinrichtung (B₁ - B₁₄) zwischen dem Knotenpaar (nₚ-n_{q}), welchem das Adresselement (nₚ,n_{q}) zugewiesen ist, angibt;
Speichern (308) des Inhaltselements in Abhängigkeit von dem jeweiligen Adresselement (nₚ,n_{q}), dem das Inhaltselement (M₁ - M₃) zugewiesen wurde;
Erfassen (306) von mindestens einem Betriebsparameter (m₁ - mⱼ) für mindestens ein ausgewähltes Knotenpaar (nₚ-n_{q}) oder eine ausgewählte Knoteneinrichtung (A₁ - A₁₃); und
Speichern (309) des mindestens einen Betriebsparameters (m₁ - mⱼ) als ein weiteres Inhaltselement (M₁ - M₃) in Abhängigkeit von dem jeweiligen Adresselement (nₚ,n_{q}), das dem ausgewählten Knotenpaar (nₚ-n_{q}) oder der ausgewählten Knoteneinrichtung (A₁ - A₁₃) zugewiesen wurde;
wobei beim Erfassen (303) der Kanteneinrichtungen (B₁ - B₁₄) und beim Erfassen (306) des mindestens einen Betriebsparameters (m₁ - mⱼ) ein jeweiliger Globalzeit-Zeitpunkt (tₓ) mit erfasst wird, und der jeweilige Globalzeit-Zeitpunkt (tₓ) beim Speichern des Inhaltselements (M₁ - M₃) und/oder des weiteren Inhaltselements (M₁ - M₃) mitgespeichert wird, **dadurch gekennzeichnet, dass**
das Speichern (307 - 309) des Adresselements (nₚ,n_{q}), des Inhaltselements (M₁ - M₃) und des mindestens einen weiteren Inhaltselements (M₁ - M₃) in einer Datenbankeinrichtung (110) mit einer tensoriellen Datenbankstruktur (510) erfolgt.

2. Verfahren nach Anspruch 1, wobei
mindestens ein Teil der Knoteneinrichtungen (A₁ - A₁₃) oder Kanteneinrichtungen (B₁ - B₁₄) den mindestens einen Betriebsparameter (m₁ - mⱼ) und den zugehörigen Globalzeit-Zeitpunkt gemäß der tensoriellen Datenbankstruktur (510) bereitstellt.

3. Verfahren nach einem der vorhergehenden Ansprüche, ferner umfassend:
Erfassen eines Satzes von verschiedenen Betriebsparametern (m₁ - mⱼ) ; und
Speichern der verschiedenen Betriebsparameter als weitere Inhaltselemente (M₁ - M₃) in Abhängigkeit von dem jeweiligen Adresselement (nₚ,n_{q}), dem die weiteren Inhaltselemente (M₁ - M₃) zugewiesen sind.

4. Verfahren nach einem der vorhergehenden Ansprüche, wobei
der mindestens eine Betriebsparameter (m₁ - mⱼ) einen Verkehrsfluss, einen Stromfluss, einen Materialfluss, einen Energiefluss, eine Leistungsaufnahme und/oder einen Versorgungsweg charakterisiert.

5. Verfahren nach einem der vorhergehenden Ansprüche, wobei
das Erfassen des Globalzeit-Zeitpunkts (tₓ) mit Hilfe von Satelliten, insbesondere eines GPS-Systems, erfolgt.

6. Verfahren nach einem der vorhergehenden Ansprüche, wobei
mindestens ein Teil der Knoteneinrichtungen (A₁ - A₁₃) und/oder Kanteneinrichtungen (B₁ - B₁₄) den mindestens einen Betriebsparameter (m₁ - mⱼ) in Abhängigkeit von dem zugewiesenen Adresselement (nₚ,n_{q}) misst und/oder speichert.

7. Verfahren nach einem der vorhergehenden Ansprüche, ferner umfassend:
Steuern mindestens eines Teils der Knoteneinrichtungen (A₁ - A₁₃) und/oder Kanteneinrichtungen (B₁ - B₁₄) in Abhängigkeit von den gespeicherten Inhaltselementen (M₁ - M₃).

8. Verfahren nach Anspruch 7, wobei
das Steuern durch den mindestens einen Teil der Knoteneinrichtungen (A₁ - A₁₃) und/oder Kanteneinrichtungen (B₁ - B₁₄) selbst erfolgt.

9. Verfahren nach einem der vorhergehenden Ansprüche, wobei
das Koppeln jeder Knoteneinrichtung (A₁ - A₁₃) mit mindestens einer anderen Knoteneinrichtung (A₁ - A₁₃) in Abhängigkeit von den gespeicherten Inhaltselementen (M₁ - M₃) erfolgt.

10. Verfahren nach einem der vorhergehenden Ansprüche, ferner umfassend:
Bestimmen eines Referenzwertes für einen der mindestens einen Betriebsparameter (m₁ - mⱼ);
Berechnen eines relativen Betriebsparameters (m₁ - mⱼ) in Abhängigkeit von dem erfassten Betriebsparameter (m₁ - mⱼ) und dem zugehörigen Referenzwert; und
Speichern des relativen Betriebsparameters (m₁ - mⱼ) in Abhängigkeit von dem Adresselement (nₚ,n_{q}), dem der erfasste Betriebsparameter (m₁ - mⱼ) zugewiesen ist.

11. Netzwerk (100) mit mehreren Knoteneinrichtungen (A₁ - A₁₃), das geeignet ist, das Verfahren nach einem der vorhergehenden Ansprüche auszuführen.

12. Netzwerk nach Anspruch 11, wobei
das Netzwerk (100) für einen Transport oder eine Übertragung von Ressourcen, Material, Strom, Energie und/oder Verkehr geeignet ist.

13. Netzwerk nach Anspruch 11 oder 12, umfassend:
eine Datenbankeinrichtung (110) zum Speichern von Adresselementen (nₚ,n_{q}) und mindestens einem Betriebsparameter (m₁ - mⱼ) von Knotenpaaren (nₚ-n_{q}) aus zwei Knoteneinrichtungen (A₁ - A₁₃), die mit Hilfe einer jeweiligen Kanteneinrichtung (B₁ - B₁₄) miteinander koppelbar sind; und
eine Recheneinheit (212) zum Zuweisen der Inhaltselemente (M₁ - M₃) zu dem jeweiligen Adresselement (nₚ,n_{q}) und zum Abrufen des Adresselements (nₚ,n_{q}) oder der Inhaltselemente (M₁ - M₃).

14. Netzwerk nach Anspruch 12 oder 13, ferner umfassend:
eine Benutzerschnittstelle zum Anzeigen des gespeicherten Adresselements (nₚ,n_{q}) und der gespeicherten Inhaltselemente (M₁ - M₃) für einen Betreiber des Netzwerks (100) .

## Claims

1. Method for operating a network having multiple node devices, comprising:
coupling (301) each node device (A₁ - A₁₃) to at least one other node device (A₁ - A₁₃) by means of a respective edge device (B₁ - B₁₄) ;
stipulating (302) a global time (t) for all the node devices (A₁ - A₁₃) and edge devices (B₁ - B₁₄) ;
recording (303) the node devices (A₁ - A₁₃);
recording (303) the edge devices (B₁ - B₁₄);
allocating (304) an address element (nₚ,n_{q}) to each node pair nₚ-n_{q} comprising two node devices (A₁ - A₁₃) that are intercouplable by means of an edge device (B₁ - B₁₄);
storing (307) the address elements (nₚ,n_{q});
allocating (305) a content element (M₁ - M₃) to each address element (nₚ,n_{q}), the content element indicating the presence or absence of an edge device (B₁ - B₁₄) between the node pair (nₚ-n_{q}) to which the address element (nₚ,n_{q}) is allocated;
storing (308) the content element on the basis of the respective address element (nₚ,n_{q}) to which the content element (M₁ - M₃) has been allocated;
recording (306) at least one operating parameter (m₁ - mⱼ) for at least one selected node pair (nₚ-n_{q}) or a selected node device (A₁ - A₁₃); and
storing (309) the at least one operating parameter (m₁ - mⱼ) as a further content element (M₁ - M₃) on the basis of the respective address element (nₚ,n_{q}) that has been allocated to the selected node pair (nₚ-n_{q}) or the selected node device (A₁ - A₁₃) ;
wherein the recording (303) of the edge devices (B₁ - B₁₄) and the recording (306) of the at least one operating parameter (m₁ - mⱼ) involve a respective global time instant (tₓ) being recorded as well, and the respective global time instant (tₓ) is also stored when the content element (M₁ - M₃) and/or the further content element (M₁ - M₃) is/are stored, **characterized in that**
the storing (307 - 309) of the address element (nₚ,n_{q}), of the content element (M₁ - M₃) and of the at least one further content element (M₁ - M₃) is effected in a database device (110) having a tensorial database structure (510).

2. Method according to Claim 1, wherein
at least one portion of the node devices (A₁ - A₁₃) or edge devices (B₁ - B₁₄) provides the at least one operating parameter (m₁ - mⱼ) and the associated global time instant according to the tensorial database structure (510).

3. Method according to one of the preceding claims, further comprising:
recording a set of different operating parameters (m₁ - mⱼ) ; and
storing the different operating parameters as further content elements (M₁ - M₃) on the basis of the respective address element (nₚ,n_{q}) to which the further content elements (M₁ - M₃) are allocated.

4. Method according to one of the preceding claims, wherein
the at least one operating parameter (m₁ - mⱼ) characterizes a flow of traffic, a flow of current, a flow of material, a flow of energy, a power draw and/or a supply path.

5. Method according to one of the preceding claims, wherein
the recording of the global time instant (tₓ) is effected by means of satellites, particularly a GPS system.

6. Method according to one of the preceding claims, wherein
at least one portion of the node devices (A₁ - A₁₃) and/or edge devices (B₁ - B₁₄) measures and/or stores the at least one operating parameter (m₁ - mⱼ) on the basis of the allocated address element (nₚ,n_{q}).

7. Method according to one of the preceding claims, further comprising:
controlling at least one portion of the node devices (A₁ - A₁₃) and/or edge devices (B₁ - B₁₄) on the basis of the stored content elements (M₁ - M₃).

8. Method according to Claim 7, wherein
the controlling is effected by the at least one portion of the node devices (A₁ - A₁₃) and/or edge devices (B₁ - B₁₄) themselves.

9. Method according to one of the preceding claims, wherein
the coupling of each node device (A₁ - A₁₃) to at least one other node device (A₁ - A₁₃) is effected on the basis of the stored content elements (M₁ - M₃).

10. Method according to one of the preceding claims, further comprising:
determining a reference value for one of the at least one operating parameters (m₁ - mⱼ);
computing a relative operating parameter (m₁ - mⱼ) on the basis of the recorded operating parameter (m₁ - mⱼ) and the associated reference value; and
storing the relative operating parameter (m₁ - mⱼ) on the basis of the address element (nₚ,n_{q}) to which the recorded operating parameter (m₁ - mⱼ) is allocated.

11. Network (100) having multiple node devices (A₁ - A₁₃) that is suitable for carrying out the method according to one of the preceding claims.

12. Network according to Claim 11, wherein
the network (100) is suitable for transporting or transmitting resources, material, current, energy and/or traffic.

13. Network according to Claim 11 or 12, comprising:
a database device (110) for storing address elements (nₚ,n_{q}) and at least one operating parameter (m₁ - mⱼ) of node pairs (nₚ-n_{q}) comprising two node devices (A₁ - A₁₃) that are intercouplable by means of using a respective edge device (B₁ - B₁₄); and
a computation unit (212) for allocating the content elements (M₁ - M₃) to the respective address element (nₚ,n_{q}) and for retrieving the address element (nₚ,n_{q}) or the content elements (M₁ - M₃) .

14. The network according to Claim 12 or 13, further comprising:
a user interface for displaying the stored address element (nₚ,n_{q}) and the stored content elements (M₁ - M₃) for an operator of the network (100).

## Revendications

1. Procédé pour faire fonctionner un réseau comportant plusieurs dispositifs nodaux, comprenant :
le couplage (301) de chaque dispositif nodal (A₁ - A₁₃) à au moins un autre dispositif nodal (A₁ - A₁₃) à l'aide d'un dispositif d'arête respectif (B₁ - B₁₄) ;
la détermination (302) d'un temps global (t) pour tous les dispositifs nodaux (A₁ - A₁₃) et dispositifs d'arête (B₁ - B₁₄) ;
la détection (303) des dispositifs nodaux (A₁ - A₁₃) ;
la détection (303) des dispositifs d'arête (B₁ - B₁₄) ;
l'attribution (304) d'un élément d'adresse (nₚ,n_{q}) à chaque paire de noeuds nₚ,n_{q} issue de deux dispositifs nodaux (A₁ - A₁₃) qui sont couplés l'un à l'autre à l'aide d'un dispositif d'arête (B₁ - B₁₄) ;
la sauvegarde (307) des éléments d'adresse (nₚ,n_{q}) ;
l'attribution (305) d'un élément de contenu (M₁ - M₃) à chaque élément d'adresse (nₚ,n_{q}), l'élément de contenu indiquant la présence ou l'absence d'un dispositif d'arête (B₁ - B₁₄) entre la paire de noeuds (nₚ,n_{q}) à laquelle est attribué l'élément d'adresse (nₚ,n_{q}) ;
la sauvegarde (308) de l'élément de contenu en fonction de l'élément d'adresse respectif (nₚ,n_{q}) auquel a été attribué l'élément de contenu (M₁ - M₃) ;
la détection (306) d'au moins un paramètre de service (m₁ - mⱼ) pour au moins une paire de noeuds sélectionnée (nₚ,n_{q}) ou un dispositif nodal sélectionné (A₁ - A₁₃) ; et
la sauvegarde (309) de l'au moins un paramètre de service (m₁ - mⱼ) en tant qu'autre élément de contenu (M₁ - M₃) en fonction de l'élément d'adresse respectif (nₚ,n_{q}) qui a été attribué à la paire de noeuds sélectionnée (nₚ,n_{q}) ou au dispositif nodal sélectionné (A₁ - A₁₃) ;
à la détection (303) du dispositif d'arête (B₁ - B₁₄) et à la détection (306) de l'au moins un paramètre de service (m₁ - mⱼ) étant codétecté un instant respectif (tₓ) du temps global et l'instant (tₓ) du temps global étant également sauvegardé à la sauvegarde de l'élément de contenu (M₁ - M₃) et/ou de l'autre élément de contenu (M₁ - M₃), **caractérisé en ce que**
la sauvegarde (307 - 309) de l'élément d'adresse (nₚ,n_{q}), de l'élément de contenu (M₁ - M₃) et de l'au moins un autre élément de contenu (M₁ - M₃) ayant lieu dans un dispositif de base de données (110) avec une structure de base de données tensorielle (510).

2. Procédé selon la revendication 1, au moins une partie des dispositifs nodaux (A₁ - A₁₃) ou des dispositifs d'arête (B₁ - B₁₄) fournissant l'au moins un paramètre de service (m₁ - mⱼ) et l'instant du temps global associé conformément à la structure de base de données tensorielle (510).

3. Procédé selon l'une des revendications précédentes, comprenant en outre :
la détection d'un jeu de différents paramètres de service (m₁ - mⱼ) ; et
la sauvegarde des différents paramètre de service en tant qu'autres éléments de contenu (M₁ - M₃) en fonction de l'élément d'adresse respectif (nₚ,n_{q}) auquel sont attribués les autres éléments de contenu (M₁ - M₃).

4. Procédé selon l'une des revendications précédentes, l'au moins un paramètre de service (m₁ - mⱼ) caractérisant un flux de trafic, un flux de courant, un flux de matière, un flux d'énergie, une absorption de puissance et/ou un trajet d'approvisionnement.

5. Procédé selon l'une des revendications précédentes, la détection de l'instant (tₓ) du temps global ayant lieu à l'aide de satellites, et plus particulièrement d'un système GPS.

6. Procédé selon l'une des revendications précédentes, au moins une partie des dispositifs nodaux (A₁ - A₁₃) et/ou des dispositifs d'arête (B₁ - B₁₄) mesurant et/ou sauvegardant l'au moins un paramètre de service (m₁ - mⱼ) en fonction de l'élément d'adresse attribué (nₚ,n_{q}).

7. Procédé selon l'une des revendications précédentes, comprenant en outre :
la commande d'au moins une partie des dispositifs nodaux (A₁ - A₁₃) et/ou des dispositifs d'arête (B₁ - B₁₄) en fonction des éléments de contenu sauvegardés (M₁ - M₃).

8. Procédé selon la revendication 7, la commande étant effectuée par l'au moins une partie des dispositifs nodaux (A₁ - A₁₃) et/ou des dispositifs d'arête (B₁ - B₁₄).

9. Procédé selon l'une des revendications précédentes, le couplage de chaque dispositif nodal (A₁ - A₁₃) à au moins un autre dispositif nodal (A₁ - A₁₃) ayant lieu en fonction des éléments de contenu sauvegardés (M₁ - M₃).

10. Procédé selon l'une des revendications précédentes, comprenant en outre :
la détermination d'une valeur de référence pour l'un des au moins un paramètre de service (m₁ - mⱼ) ;
le calcul d'un paramètre de service relatif (m₁ - mⱼ) en fonction du paramètre de service détecté (m₁ - mⱼ) et de la valeur de référence associée ; et
la sauvegarde du paramètre de service relatif (m₁ - mⱼ) en fonction de l'élément d'adresse (nₚ,n_{q}) auquel est attribué le paramètre de service détecté (m₁ - mⱼ).

11. Réseau (100) comportant plusieurs dispositifs nodaux (A₁ - A₁₃), adapté pour exécuter le procédé selon l'une des revendications précédentes.

12. Réseau selon la revendication 11, le réseau (100) étant adapté pour un transport ou une transmission de ressources, de matière, de courant, d'énergie et/ou de trafic.

13. Réseau selon la revendication 11 ou 12, comprenant : un dispositif de base de données (110) pour sauvegarder des éléments d'adresse (nₚ,n_{q}) et au moins un paramètre de service (m₁ - mⱼ) de paires de noeuds (nₚ,n_{q}) issues de deux dispositifs nodaux (A₁ - A₁₃) qui peuvent être couplés l'un à l'autre à l'aide d'un dispositif d'arête respectif (B₁ - B₁₄) ; et
une unité de calcul (212) pour attribuer les éléments de contenu (M₁ - M₃) à l'élément d'adresse respectif (nₚ,n_{q}) et pour appeler l'élément d'adresse (nₚ,n_{q}) ou les éléments de contenu (M₁ - M₃) .

14. Réseau selon la revendication 12 ou 13, comprenant en outre:
une interface utilisateur pour afficher l'élément d'adresse sauvegardé (nₚ,n_{q}) et les éléments de contenu sauvegardés (M₁ - M₃) pour un gestionnaire du réseau (100) .
